# EUROPÄISCHE PATENTSCHRIFT

(11) **EP 1 875 593 B1**
(45) Veröffentlichungstag und Bekanntmachung des Hinweises auf die Patenterteilung: **02.01.2013**
(21) Anmeldenummer: 06724588.6
(22) Anmeldetag: 26.04.2006
(51) Int. Cl.: H02M 5/458

(54) **VERFAHREN UND EINRICHTUNG ZUR NUTZUNG VON WINDENERGIE**
METHOD AND DEVICE FOR USING WIND ENERGY
PROCEDE ET DISPOSITIF POUR UTILISER L'ENERGIE EOLIENNE

(30) Priorität: 27.04.2005 DE 102005019609
(43) Veröffentlichungstag der Anmeldung: 09.01.2008
(73) Patentinhaber: Huss, Rainer, 87474 Buchenberg (DE)
(72) Erfinder: Huss, Rainer, 87474 Buchenberg (DE)
(74) Vertreter: Kuhnen, Rainer-Andreas
(86) Internationale Anmeldenummer: PCT/EP2006/003876
(87) Internationale Veröffentlichungsnummer: WO 2006/114301

(56) Entgegenhaltungen:
- DE-A1- 10 239 757
- GB-A- 2 246 602
- NL-A- 8 702 314

## Beschreibung

Die Erfindung betrifft ein Verfahren und eine Einrichtung zur Nutzung von Windenergie, welche mittels einer Windkraftanlage, die einen elektrischen Generator und einen diesen antreibenden Windrotor enthält, in elektrische Energie umgewandelt wird, welche wiederum einer Verbraucheranordnung zugeführt wird.

Vornehmliches Anwendungsgebiet der Erfindung ist die Nutzung von Windenergie im sogenannten Inselbetrieb, bei welchem die von der Windkraftanlage erzeugte elektrische Energie nicht in ein Wechselstromverbundnetz eingespeist wird, in das auch andere Erzeuger elektrische Energie einspeisen und aus dem eine Mehrzahl von Verbrauchern ihren Bedarf an elektrischer Energie deckt.

Grundsätze für die Nutzung von Windenergie mittels Windkraftanlagen im Inselbetrieb sind dem Buch "Windkraftanlagen" von Siegfried Heier, Teubner Verlage, 3. Auflage, beispielsweise Seiten 374 bis 377, entnehmbar.

Bei einem einfachen Aufbau der Windkraftanlage für den Inselbetrieb wird die mechanische Energie des Windrotors durch einen Generator, in der Regel einen selbsterregten Synchrongenerator, in elektrische Energie umgewandelt und diese direkt dem Verbraucher oder den Verbrauchern zugeführt.

Bei diesem Aufbau ist nur eine sehr einfache Regelung erforderlich, durch welche sichergestellt wird, daß der Windrotor eine vorgegebene maximale Drehzahl nicht überschreitet. Die Drehzahl des Windrotors und des von ihm angetriebenen Generators und damit auch die erzeugte Frequenz und Spannung schwanken bei diesem Aufbau abhängig von der Windgeschwindigkeit und abhängig von der Belastung durch die angeschlossenen Verbraucher in einem sehr großen Bereich.

Es können daher nur einfache elektrische Verbraucher angeschlossen werden, deren Arbeitsergebnis abhängig von der aufgenommenen elektrischen Leistung nur eine quantitative, nicht aber eine qualitative Veränderung erfährt. Solche Verbraucher sind Widerstandsheizanlagen, Elektrolyseanlagen mit vorgeschalteter Gleichrichteranordnung, Akkumulatorenbatterien mit vorgestalteten Gleichrichtern zur Energiespeicherung und dergleichen.

Aus der DE 36 13 871 A1 ist eine Meerwasserentsalzungsanlage bekannt, bei der von einem durch einen Windrotor angetriebenen elektrischen Generator die Leistung zum Antrieb eines Kreiselverdichters in einem Verdichterkreislauf einer Verdampfer-Kondensatoreinheit bereitgestellt wird. Zur Erwärmung des Meerwassers und zur Verhinderung der Überschreitung der maximal zulässigen Drehzahl des Verdichters wird eine elektrische Heizung im Verdampfersumpf zugeschaltet oder abgeschaltet, wobei die elektrische Heizleistung ebenfalls von dem durch den Windrotor angetriebenen Generator abgeleitet wird.

Aus der DE 102 55 320 B4 ist ein Verfahren zum Betreiben einer Brüdenverdichter-Windenergieanlage zur Wasseraufbereitung bekannt, bei welchem von einer gesonderten Energiequelle aus Heizleistung zu einer Heizeinrichtung geführt wird, welche das aufzubereitende Wasser erwärmt.

Nach der Lehre der DE 102 55 320 B4 wird die Drehung des Windrotors über ein mechanisches Getriebe auf die Verdichterwelle übertragen. Es besteht daher eine eindeutige Zuordnung zwischen den Drehzahlen des Windrotors und des Verdichters. Nach der Lehre der DE 101 55 320 B4 wird die Drehung des Windrotors über ein mechanisches Getriebe auf den Läufer eines Generators übertragen. Es besteht daher eine eindeutige Zuordnung zwischen der Drehzahl des Windrotors und der Frequenz des vom Generators erzeugten Drehstroms und damit ist auch die Drehzahl des Verdichters festgelegt. In beiden Fällen ist keine Regelung möglich, bei der der Windrotor bei wechselnden Windgeschwindigkeiten immer mit optimalem Wirkungsgrad betrieben wird und gleichzeitig die Windenergie vollständig von den nachgeschalteten Verbrauchern aufgenommen und auf diese derart verteilt wird, daß die maximal mögliche Destillatmenge produziert wird.

Aus der GB-A-2 246 602 ist ein Verfahren gemäß dem Oberbegriff des Anspruchs 1 bekannt.

Durch die vorliegende Erfindung soll die Aufgabe gelöst werden, Windenergie unter Verwendung einer eine Verbraucheranordnung speisenden Windkraftanlage vorzugsweise im Inselbetrieb so zu nutzen, daß die jeweils zur Verfügung stehende Windenergie in einem weiten Bereich von rasch wechselnden Windgeschwindigkeiten zu einem hohen Prozentsatz genutzt wird und gleichzeitig der Regelungsaufwand und/oder Steuerungsaufwand für Regelungs- und/oder Steuermittel zwischen der Windkraftanlage und der Verbraucheranordnung gering gehalten werden kann.

Diese Aufgabe wird erfindungsgemäß durch ein Verfahren mit den Merkmalen von Anspruch 1 und durch eine Einrichtung mit den Merkmalen von Anspruch 4 gelöst.

Vorteilhafte Ausgestaltungen und Weiterbildungen sind Gegenstand der den Ansprüchen 1 und 4 jeweils nachgeordneten Ansprüche, deren Inhalt hierdurch ausdrücklich zum Bestandteil der Beschreibung gemacht wird, ohne an dieser Stelle den Wortlaut dieser Ansprüche zu wiederholen.

Vor einer Beschreibung bevorzugter Ausführungsbeispiele seien folgende allgemeine Betrachtungen zum besseren Verständnis der Erfindung vorausgeschickt:

Versuche und theoretische Untersuchungen zeigen, daß das Windenergieangebot proportional der dritten Potenz der Windgeschwindigkeit zunimmt. Wird die Windkraftanlage mit der der jeweiligen Windgeschwindigkeit entsprechenden optimalen Drehzahl betrieben, so steigt auch die erzeugte elektrische Leistung jedenfalls innerhalb eines bestimmten Windrotor-Drehzahlbereiches ungefähr proportional der dritten Potenz der Windgeschwindigkeit an.

Wird im Inselbetrieb der Windkraftanlage dafür Sorge getragen, daß das schnell und stark schwankende Energieangebot am Ausgang des Generators der Windkraftanlage von der daran angeschlossenen Verbraucheranordnung jederzeit vollständig abgenommen wird, dann müssen sich Regelungs- und/oder Steuerungsmittel zwischen der Windkraftanlage und der Verbraucheranordnung nicht mit Leistungsverteilungsproblemen, etwa mit der Ableitung von überschüssiger Energie zu "dump loads" befassen, sondern haben die Aufgabe, die am Ausgang des Generators der Windkraftanlage zur Verfügung gestellte elektrische Leistung beispielsweise bezüglich Spannung oder Frequenz in eine gleich große Leistung umzuformen, welche am Eingang der Verbraucheranordnung benötigt wird.

Es sei hier ausdrücklich erklärt, daß der der Erfindung zugrunde liegende Gedanke sich auch auf vom Ausgang des Generators der Windkraftanlage abgenommene Teil-Leistungsströme beziehen kann, derart, daß ein Teil der Ausgangsleistung des Generators der Windkraftanlage einem als Grundlast wirksamen Teil der Verbraucheranordnung zugeführt wird, während ein stark schwankender Anteil des Leistungsangebotes des Generators der Windkraftanlage einem besonderen extrem leistungsabnahmetoleranten Verbraucher zugeführt wird, dessen Leistungsbedarf abhängig von der Drehzahl seines Antriebsmotors in entsprechender Weise schwankt wie die Ausgangsleistung des Generators der Windkraftanlage sich abhängig von der Windgeschwindigkeit ändert. Unter extrem leistungsabnahmetolerant ist das Verhalten eines Verbrauchers zu verstehen, welcher extrem rasch und extrem stark schwankende Leistungsangebote mit im wesentlichen gleichbleibendem Wirkungsgrad und gleichbleibendem qualitativen Arbeitsergebnis verarbeitet.

Jedenfalls berücksichtigt die hier vorgeschlagene Entsprechung des Verlaufes des Antriebsleistungsbedarfes der Verbraucheranordnung in Abhängigkeit von der Antriebsdrehzahl oder der Antriebs-Speisespannung einerseits und des Verlaufes der von der Windkraftanlage erzeugten elektrischen Energie in Abhängigkeit von der Windgeschwindigkeit, andererseits, daß eine belastungsabhängige, definierte Änderung des Verhältnisses von Windgeschwindigkeit und Windrotordrehzahl besteht.

Nachfolgend werden Ausführungsbeispiele der Erfindung anhand der Zeichnungen näher erläutert. Es stellen dar:
- Fig. 1: eine schematische Abbildung einer Windkraftanlage und einer daran angeschlossenen Verbraucheranordnung der hier angegebenen Art;
- Fig.2: ein Diagramm zur Erläuterung der Abhängigkeit der von einem Windrotor erzeugbaren Maximalleistung von der Windrotordrehzahl;
- Fig. 3: eine schematische Darstellung einer weitergebildeten Ausführungsform einer Einrichtung der hier angegebene Art; und
- Fig. 4: eine schematische Darstellung einer Einrichtung zur Nutzung von Windenergie für den Inselbetrieb nach dem Stand der Technik.

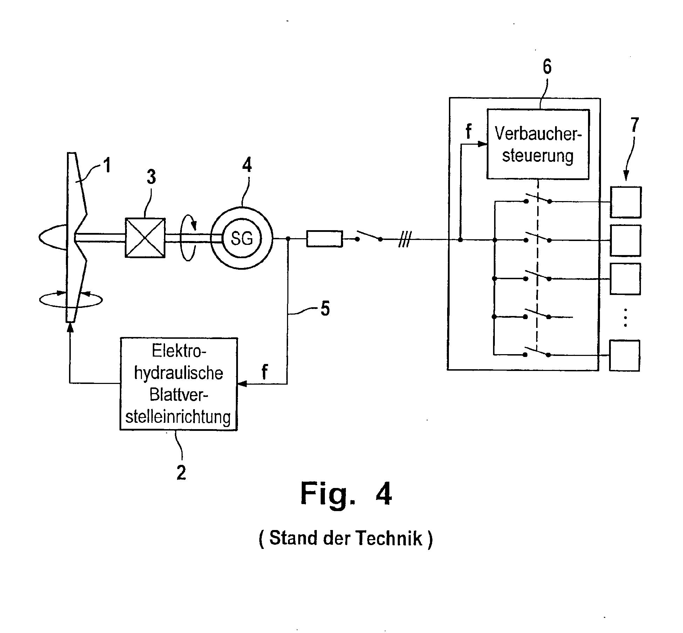

Es sei zunächst auf Fig. 4 Bezug genommen. Hier ist eine Einrichtung zur Nutzung von Windenergie schematisch angegeben, wie sie aus Seite 377 des Eingangs erwähnten Buches "Windkraftanlagen" zu entnehmen ist.

In Fig. 4 ist der Windrotor einer Windkraftanlage mit 1 bezeichnet. Bei der bekannten Einrichtung nach Fig. 4 hat der Windrotor eine elektrohydraulische Blattverstelleinrichtung, die in Fig. 4 schematisch bei 2 angegeben ist. Der Windrotor 1 ist mit einem Getriebe 3 unveränderlichen Übersetzungsverhältnisses gekuppelt, welches zum Antrieb eines selbsterregten Synchrongenerators 4 dient. Die Frequenz der Ausgangsspannung des Synchrongenerators 4 wird überwacht und ein entsprechendes Detektorsignal wird über eine Leitung 5 der elektrohydraulischen Blattverstelleinrichtung 2 zugeführt, um die Drehzahl des Windrotors 1 unabhängig von der Windgeschwindigkeit und unter Berücksichtigung des lastabhängigen Antriebsmomentes des Generators 4 in einem bestimmten Bereich zu halten.

Da sich die Ausgangsleistung des Generators 4 im wesentlichen mit der dritten Potenz der Windgeschwindigkeit des auf den Windrotor 1 einwirkenden Windes ändert, muß für eine vollständige Nutzung der von dem Generator angebotenen elektrischen Energie ein entsprechend dem schwankenden Energieangebot mittels einer Verbrauchersteuerung 6 vorgenommenes Zuschalten und Abschalten von Verbrauchern einer Verbraucherreihe 7 vorgenommen werden, da bei Inselbetrieb nicht die Möglichkeit besteht, im Falle einer nur teilweisen Nutzung der Ausgangsleistung des Generators 4 überschüssige Leistung in ein Verbundsnetz einzuspeisen. Bei dieser Regelung wird die Windkraftanlage nicht auf die von der Windgeschwindigkeit stark abhängigen maximalen Leistungsabgabe geregelt, sondern nach der momentanen Leistungsaufnahmebereitschaft der angeschlossenen Verbraucher, da eine darüber hinaus gehende Leistung nicht genutzt werden kann.

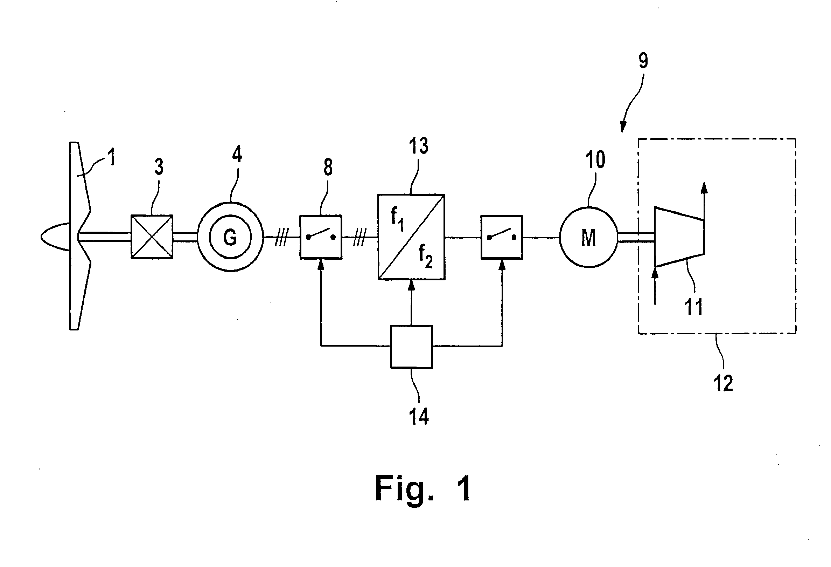

Demgegenüber kann eine Einrichtung der hier angegebenen Art entsprechend Fig. 1 in einem großen Bereich unterschiedlicher Windgeschwindigkeiten auf die maximale Leistungsabgabe eingeregelt und von der angeschlossenen Verbraucheranordnung vollständig genutzt werden.

Eine Einrichtung entsprechend Fig. 1 enthält in einer besonders einfachen Ausführungsform einen Windrotor 1 ohne Blattverstellung, der über ein Getriebe 3 konstanten Übersetzungsverhältnisses mit dem Generator 4 gekuppelt ist. Der Generator 4 ist vorzugsweise ein Synchrongenerator, derart, daß die Ausgangsfrequenz der von dem Generator 4 gelieferten Spannung proportional zur Drehzahl des Windrotors 1 ist.

Über einen Schalter 8 ist die aus dem Windrotor 1, dem Getriebe 3 und dem Generator 4 bestehende Windkraftanlage mit einer Verbraucheranordnung 9 verbindbar, welche aus einem Antriebsmotor 10, vorzugsweise einem Synchronmotor, und einem damit gekuppeltem Turboverdichter oder Strömungsmaschinen-Verdichter 11 besteht.

Der Verdichter 11 ist Bestandteil eines hochdynamisch regelbaren, schnell reagierenden Wärmepumpenkreislauf 12, wobei es sich um einen offenen oder einen geschlossenen Wärmepumpenkreislaufs handeln kann.

Ein offener Wärmepumpenkreislauf findet sich in Brüdenverdichtungsanlagen, die sich für Koch- und Eindampfprozesse eignen und auch in Destillations- und Rektifikationsprozessen eingebunden werden. Als Beispiele seien die Erzeugung von Trinkwasser aus Meerwasser oder Brackwasser unter mechanischer Dampfverdichtung sowie die Aufbereitung von Abwasser durch Volumenreduzierung bei gleichzeitiger Erzeugung von destillierten Wasser genannt. Als weiteres Beispiel eines geschlossenen Wärmepumpenkreislaufs sei ein Kühlaggregat, etwa zur Eiserzeugung genannt.

Von Bedeutung ist, daß die Leistungsaufnahme eines Strömungsmaschinenverdichters oder Turboverdichters mit der dritten Potenz seiner Antriebsdrehzahl ansteigt. Demgemäß steigt auch die Leistungsaufnahme des Antriebsmotors 10 mit der dritten Potenz der Verdichterdrehzahl an.

Da die Verbraucheranordnung 9 mit dem Strömungsmaschinen-Verdichter 11 innerhalb der Wärmepumpenanlage 12 insbesondere für die zuvor angegebene Zwecke der Trinkwassergewinnung abhängig von einer hochdynamisch schwankenden Leistungsaufnahme nicht ein qualitativ schwankendes, sondern ein quantitativ schwankendes Arbeitsergebnis liefert, ist die Verbraucheranordnung 9 gleichsam ein idealer im oben angegebenen Sinne extrem leistungsabnahmetoleranter Verbraucher für die maximal erzeugbare Ausgangsleistung des Generators 4, welche sich annähernd abhängig von der dritten Potenz der Windgeschwindigkeit und im wesentlichen abhängig von der dritten Potenz der Windrotordrehzahl ändert, derart, daß es für die Anpassung der Ausgangsleistung des Generators 4 an die dem Antriebsmotor 10 zuzuführende Leistung lediglich einer Frequenzanpassung und/oder Spannungsanpassung, etwa durch einen steuerbaren Frequenzumsetzer 13 bedarf.

Man erkennt somit, daß es wegen des qualitativ ähnlichen Verlaufs der Abhängigkeit der optimalen Leistungsabgabe der Windkraftanlage und der optimalen Leistungsaufnahme des Strömungsmaschinenverdichters 11 von der Drehzahl nicht einer durch Regelungs- und Steuereinrichtungen vorzunehmenden Anpassung der Verbraucheranordnung 9 bezüglich ihres Leistungsbedarfes an das Leistungsangebot der Windkraftanlage bei stark wechselnder Drehzahl des Windrotors 1 bzw. bei stark wechselnder Windgeschwindigkeit bedarf. Bei der Ausführungsform nach Fig. 1 ist der Frequenzumsetzer 13 als ein elektrisches Getriebe im Zuge der elektrischen Welle zwischen dem Generator 4 und dem Motor 10 zu verstehen. Der Motor 10 ist in diesem Falle ein Synchronmotor oder ein nahe synchron laufender Asynchronmotor.

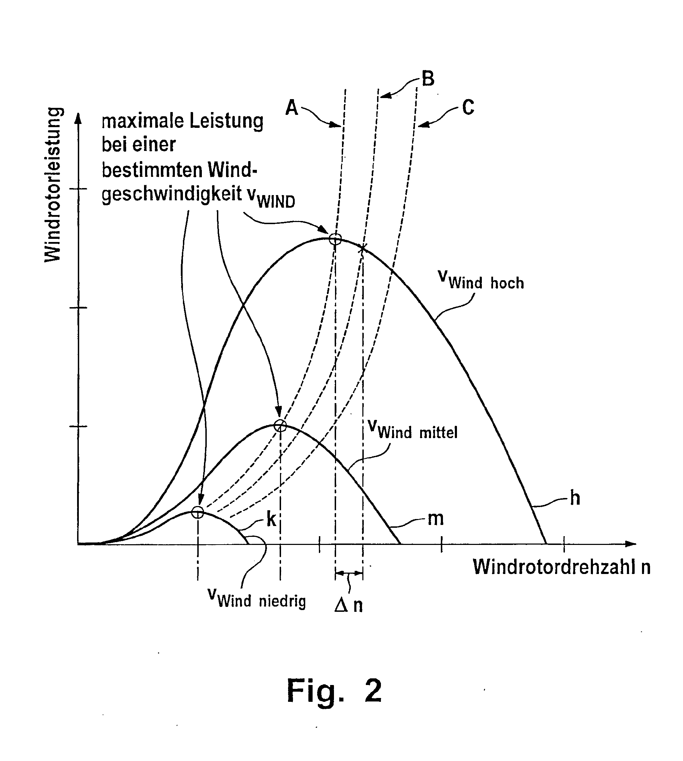

In Fig. 2 sind schematisch für drei verschiedene Windgeschwindigkeiten die von einer Windkraftanlage abgegebene Leistung in Abhängigkeit von der Drehzahl dargestellt. Verbindet man die Punkte maximaler Leistung für die verschiedenen Windgeschwindigkeiten miteinander zur Kurve A, so erhält man wie bereits erwähnt eine Zunahme der maximalen Leistung der Windkraftanlage mit der dritten Potenz der optimalen Drehzahl. Verbindet man in analoger Weise die maximalen Drehmomente zur Kurve C, so sieht man, daß für jede Windgeschwindigkeit das maximale Drehmoment bereits bei kleinerer Drehzahl als der Drehzahl für die maximale Leistung erreicht wird. Da der Leistungsbedarf des Strömungsmaschinenverdichters ebenfalls mit der dritten Potenz der Drehzahl anwächst, kann sie bei Wahl eines geeigneten Übersetzungsverhältnisses zwischen Windrotordrehzahl und Verdichterdrehzahl mit der in Fig. 2 eingezeichneten Kurve A nahezu zur Deckung gebracht werden. Wie man der Fig. 2 entnehmen kann, sind unter diesen Voraussetzungen die Punkte der maximalen Leistungsabgabe der Windkraftanlage stabile Arbeitspunkte. Bei Abweichungen zu kleineren und größeren Windrotordrehzahlen verbunden mit den dazu proportionalen Verdichterdrehzahlen läuft die Anlage selbstätig wieder zum ursprünglichen Arbeitspunkt der maximalen Leistung der Windkraftanlage zurück. Dies gilt auch für große Abweichungen, zumindest für den Drehzahlbereich oberhalb der Drehzahlen mit dem maximalen Drehmoment der Kurve C. Dadurch wird der Regelaufwand erheblich vereinfacht.

Eine gewisse Diskrepanz zwischen der maximalen Leistungsabgabe der Windkraftanlage und der Leistungsaufnahme des Strömungsmaschinenverdichters kann in der Einrichtung nach Fig. 1 dann ausgeglichen werden, wenn der Frequenzumsetzer 13 ein steuerbares Frequenzumsetzungsverhältnis aufweist. Der von einer Steuereinrichtung 14 am Frequenzumsetzer 13 vorgenommene Steuerungseingriff bedingt jedoch nur eine geringe Änderung des Frequenzumsetzungsverhältnisses und ermöglicht daher eine schnelle Einstellung der Windrotordrehzahl auf die Optimaldrehzahl zur Erzielung eines hohen Wirkungsgrades der Umwandlung der Antriebsenergie des Windrotors 1 in die elektrische Ausgangsleistung des Generators 4 bei den jeweils herrschenden Windverhältnissen und bei der für die betreffende Drehzahl des Motors M gültigen Leistungsaufnahme des Strömungsmaschinen-Verdichters 11. Selbst wenn durch die Steuereinrichtung diese Diskrepanzen nicht vollständig ausgeglichen werden, stellen sich automatisch auch bei wechselnden Windgeschwindigkeiten stabile Arbeitspunkte ein, die nur wenig von den auf der Kurve A liegenden optimalen Betriebspunkten abweichen, wie man der Fig. 2 direkt entnehmen kann. Der Leistungsbedarf des Strömungsmaschinenverdichters 11 steigt nicht nur mit der dritten Potenz der Drehzahl, sondern auch proportional mit den Druck auf der Saugseite und dem Molekulargewicht des angesaugten Mediums. Ändert sich also bei den verschiedenen Anwendungen die Temperatur des vom Verdichter angesaugten Gases oder die Art des Mediums, muß mit dem Frequenzumsetzer das Frequenzumsetzungsverhältnis zwischen den Drehzahlen des Windrotors und des Verdichters den geänderten Gegebenheiten angepaßt werden. Nach Anpassung dieses Verhältnisses liegen die bereits erwähnten günstigen Regelbedingungen wieder vor.

Im einzelnen kann mit der Welle des Windrotors 1 ein Drehzahlmesser 14a gekoppelt sein und außerdem ist im Bereich neben dem Windrotor 1 ein Windgeschwindigkeitsmesser 14b vorgesehen. In der Steuereinrichtung 14 werden die Meßsignale des Drehzahlmessers 14a und des Windgeschwindigkeitsmessers 14b miteinander verglichen. Herrscht eine gleichbleibend niedrige Windgeschwindigkeit, so folgt gemäß dem Diagramm von Fig. 2 die vom Windrotor 1 abnehmbare Leistung der Kennlinie k. Herrscht gleichbleibend mittlere Windgeschwindigkeit so folgt die vom Windrotor abnehmbare Leistung in Abhängigkeit von der Windrotordrehzahl der Kennlinie m und herrscht gleichbleibend hohe Windgeschwindigkeit, so folgt die vom Windrotor abnehmbare Leistung in Abhängigkeit von der Windrotordrehzahl der Kennlinie h. In Fig. 2 ist die für eine bestimmte Windgeschwindigkeit gültige, bei der optimalen Drehzahl maximal erzeugbare Leistung des Windrotors eingezeichnet. Die Punkte maximaler abnehmbarer Leistung des Windrotors zeigen die Zunahme mit der dritten Potenz der optimalen Drehzahl. Diese Kurve, die in Fig. 2 mit A bezeichnet ist, definiert Paare von Meßwerten des Drehzahlmessers 14a und des Windgeschwindigkeitmessers 14b, die bei einem Vergleich in der Steuereinrichtung 14 die Abnahme der jeweils vom Windrotor 1 erzeugbaren Maximalleistung durch die Verbraucheranordnung 9 signalisieren.

Ergibt sich aber bei dem Vergleich der beiden Meßwerte in der Steuereinrichtung 14 eine relativ zu einer gemessenen Windgeschwindigkeit zu hohe Windrotordrehzahl, so bedeutet dies, daß der Windrotor durch die Verbraucheranordnung 9 zu wenig belastet ist und daß bei wechselnder Windgeschwindigkeit vom Windrotor nicht etwa die maximale Leistung entsprechend der Kennlinie A abgenommen wird, sondern jeweils eine etwas zu kleine Leistung bei einer um Δn erhöhter Windrotordrehzahl, so daß die Betriebspunkte dann mit Bezug auf die Darstellung von Fig. 2 auf der Kurve dritten Grades gelegen sind, welche beispielsweise die Kurve B von Fig. 2 ist.

Die Steuereinrichtung 14 reagiert auf ein solches Vergleichsergebnis der Meßsignale der Geräte 14a und 14b durch Verstellen des Frequenzumsetzungsverhältnisses des Frequenzumsetzers 13 unter Berücksichtigung von Δn zwecks Erhöhung der Drehzahl des Antriebsmotors 10 und einhergehender Vergrößerung der Leistungsaufnahme der Verbraucheranordnung 9, so daß auf der Seite der Windkraftanlage wieder ein Betrieb entsprechend der in Fig. 2 mit A bezeichneten Parabel dritten Grades hergestellt wird.

Darüber hinaus ist hinsichtlich der Wirkungsweise der Steuereinrichtung 14 in Zusammenwirkung mit dem Frequenzumsetzer 13 bezüglich eines Inselbetriebes folgendes zu beachten. Im Inselbetrieb muß der Windrotor nicht nur den Verdichter, sondern auch diverse Hilfsaggregate, in erster Linie Pumpen, mit der erforderlichen elektrischen Leistung versorgen. Durch regelnde Eingriffnahme des Frequenzumsetzers 13 wird der Antriebsmotor des Turboverdichters oder Strömungsmaschinen-Verdichters 11 bewußt mit, einer niedrigeren Drehzahl betrieben, als der optimalen Windrotordrehzahl gemäß den Punkten auf der Parabel A von Fig. 2 entspricht, damit nicht der Turboverdichter oder Strömungsmaschinen-Verdichter 11 sämtliche Leistung des Windrotors verbraucht, sondern ausreichend Leistung für den Betrieb der Hilfsaggregate übrigbleibt.

Bei Wärmepumpenanwendungen, etwa der Destillation von Meerwasser, wird Sattdampf von einem Verdichter angesaugt. Der Sattdampfdruck variiert stark mit der Temperatur. Bei einem Rückgang der Meerwasserverdampfungstemperatur um ca. 15 °C, beispielsweise von 75 °C auf 60 °C, halbiert sich der Sattdampfdruck und damit auch der Leistungsbedarf des Verdichters. Bei niedrigen Meerwassertemperaturen wird das Windenergieangebot nur zum Teil genutzt und bei höheren Temperaturen übersteigt der Leistungsbedarf die maximal angebotene Rotorleistung, so daß der Windrotor abgebremst wird (Bereiche im Kennlinienfeld Fig. 2, links der Parabel A).

Nicht nur durch geregelte Wärmezufuhr auf der Saugseite des Turboverdichters oder Strömungsmaschinen-Verdichters vom durch den Windrotor getriebenen Generator aus (worauf weiter unten noch näher eingegangen wird), sondern auch geregelte Verstellen des Frequenzumsetzungsverhältnisses des Frequenzumsetzers 13 kann der abhängig vom geförderten Massenstrom bzw. abhängig von dem Druck des angesaugten Gases veränderliche Leistungsbedarf des Turboverdichters berücksichtigt werden.

Bedeutsam ist, daß bei der Einrichtung nach Fig. 1 eine kontinuierliche Regelung vom Stillstand des Windrotors 1 bis zu dessen Grenzdrehzahl vorgenommen wird, ohne daß die Regelcharakteristik des Reglers innerhalb der Steuereinrichtung 14 den Kennlinienverlauf entsprechend der Kurve A der Fig. 2 exakt verwirklichen muß, da lediglich die Abweichungen der Leistungsaufnahme des Strömungsmaschinenverdichters von der Kennlinie ausgeglichen werden müssen.

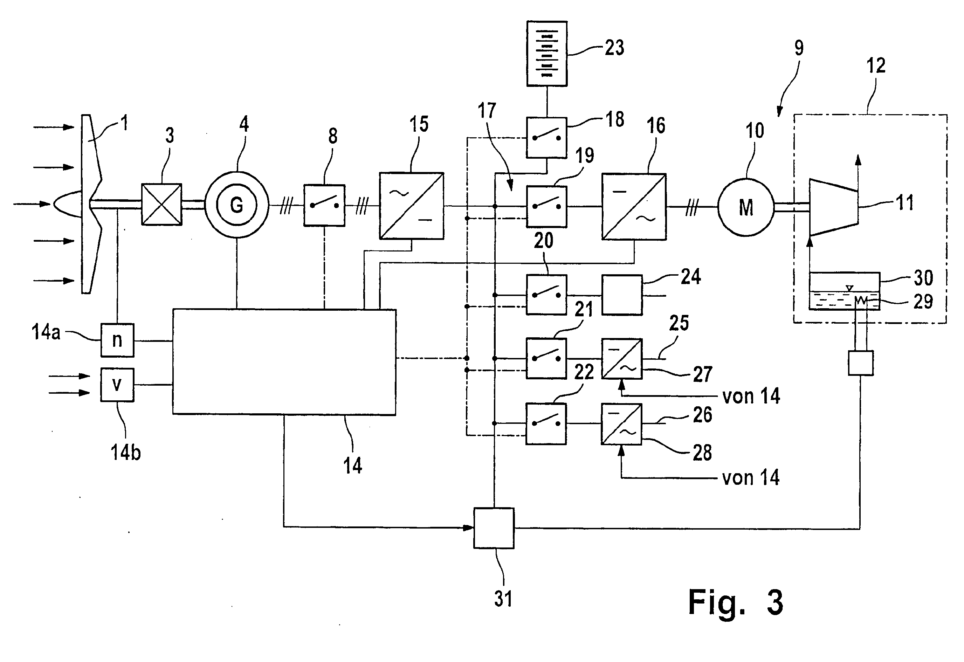

Gemäß Fig. 3, in der für entsprechende Teile wie bei der Ausfiihrungsform von Fig. 1 auch gleiche Bezugszahlen verwendet sind, kann anstelle des Frequenzumrichters 13 zwischen der Windkraftanlage aus dem Windrotor 1, dem Getriebe 3 und dem Generator 4 einerseits und der Verbraucheranordnung 9 eine Frequenzumrichteranordnung aus einem Dreiphasen-Gleichrichter 15 und einem Dreiphasen-Wechselrichter 16 vorgesehen sein.

Die in dem Generator 4 erzeugte elektrische Leistung gelangt zu dem Dreiphasen-Gleichrichter 15, der den von ihm erzeugten Gleichstrom an einen Gleichstromzwischenkreis 17 abgibt, an welchen der Dreiphasen-Wechselrichter 16 angeschlossen ist, der mit dem von ihm erzeugten Dreiphasen-Wechselstrom den zum Antrieb des Verdichters 11 dienenden Motor 10 speist. Sind durch entsprechende Steuersignale der Steuereinrichtung 14 die Schalter 18, 20, 21 und 22 geöffnet, während die Schalter 8 und 19 geschlossen sind, so entspricht die Einrichtung nach Fig. 3 im wesentlichen der Einrichtung nach Fig. 1.

Sind die Schalter 19, 20, 21 und 22 durch entsprechende Steuersignale der Steuereinrichtung 14 geöffnet, während die Schalter 8 und 18 geschlossen sind, so dient die Windkraftanlage in herkömmlicher Weise zur Aufladung der Akkubatterienstation 23, welche vorzugsweise in denjenigen Betriebsphasen aufgeladen wird, in denen es die herrschenden Windverhältnisse nicht lohnend erscheinen lassen, die Wärmepumpenanlage 12 durch Antrieb des Verdichters 11 über den Motor 10 in Betrieb zu nehmen, etwa in Schwachlastzeiten.

Durch Schließen des Schalters 20 kann ein durch die Akkubatterienstation 23 gepuffertes Gleichstromnetz 24 innerhalb des Inselbetriebes zugeschaltet werden. Ferner sind durch Schließen der Schalter 21 oder 22 Wechselstromnetze 25 bzw. 26 beispielsweise unterschiedlicher Frequenz über von der Steuereinrichtung 14 aus gesteuerte Wechselrichter 27 bzw. 28 anschaltbar.

Die von der Steuereinrichtung 14 aus eingestellten Schalter 18, 20, 21 und 22 der Ausführungsform nach Fig. 3 können als Teil einer Verbrauchersteuerung an sich bekannter Art, wie sie zuvor im Zusammenhang mit Fig. 4 erläutert wurde, verstanden werden. Diese Verbrauchersteuerung kann bei der Ausführungsform nach Fig. 3 mit der Verbraucheranordnung 9 kombiniert werden, welche eine von der Antriebsdrehzahl weit überproportional abhängige Leistung aufnimmt und damit den Einstellbetrieb oder Regelbereich in vorteilhafter Weise begrenzt, der durch Steuersignale der Steuereinrichtung 14 am Dreiphasen-Gleichrichter 15 und am Dreiphasen-Wechselrichter 16 zu verwirklichen ist.

Das mit dem Gleichstromzwischennetz 17 gekoppelte Gleichstromnetz 24 und die über die Wechselrichter 27 und 28 angeschlossenen Wechselstromnetze 25 und 26 können zur Speisung nicht dargestellter Hilfsaggregate dienen. Die Steuereinrichtung 14 und auch die Hilfsaggregate werden bei Stillstand der Windkraftanlage von der Akkubatterienstation 23 aus gespeist und betriebsbereit gehalten, wobei jedoch entsprechende Leitungsverbindungen zur Vereinfachung der Darstellung in Fig. 3 nicht gezeigt sind.

Fig. 3 zeigt eine besonders vorteilhafte Weiterbildung, bei der sich in dem Wärmepumpenkreislauf 12 eine elektrische Heizeinrichtung 29 befindet, die die aufzubereitende Flüssigkeit, beispielsweise, das zu entsalzende Meerwasser aufzuheizen vermag, das sich in einem Behälter 30 befindet, dessen über dem Flüssigkeitsspiegel befindlicher Raum mit der Einlaßseite des Strömungsmaschinenverdichters oder Turboverdichters 11 verbunden ist.

Während bei eingangs kurz beschriebenen bekannten Anordnungen dieser Art die Heizeinrichtung zur Begrenzung der Verdichterdrehzahl oder der Drehzahl des vom Windrotor angetriebenen Generators zugeschaltet oder abgeschaltet wird und somit Bestandteil der zuvor im Zusammenhang mit Fig. 4 behandelten Verbrauchersteuerung nach dem Stande der Technik ist, erfolgt bei der Einrichtung nach Fig. 3 mittels der Steuereinrichtung 14 in Abhängigkeit vom Ergebnis der Vergleiches der Meßsignale der Geräte 14a und 14b eine kontinuierliche, den Kennliniennullpunkt mitumfassende Regelung der Heizeinrichtung 29 durch Abzweigen eines gewissen Anteils der elektrischen Leistung des Gleichstromzwischenkreises 17 durch ein steuerbares elektrisches Ventil 31. Diese kontinuierliche Regelung eines der Heizeinrichtung 29 zuführbaren Bruchteiles der vom Generator 4 erzeugten elektrischen Leistung bewirkt, daß bei einer außerordentlichen schnellen Änderung der Windgeschwindigkeit und damit bei einer sehr schnell auftretenden Diskrepanz zwischen den Meßsignalen der Meßgeräte 14a und 14b der Generator 4 unabhängig von dem augenblicklichen Betriebszustand des Motors 10 und des Turboverdichters 11 wieder mit der für die betreffende Windgeschwindigkeit gültigen optimalen Last belastet werden kann und nahezu trägheitslos zu der zugehörigen optimalen Windrotordrehzahl zurückkehrt, ohne daß darauf gewartet werden muß, daß die Heizeinrichtung 29 das Volumen der zu behandelnden Flüssigkeit ausreichend erwärmt, um den Dampfdruck über der Flüssigkeit ausreichend zu erhöhen und dadurch schließlich den Verdichter 11 stärker zu belasten, damit der Antriebsmotor 10 erhöhte Leistung aufnimmt.

Die Ausführungsform nach Fig. 3 enthält also einmal den die Meßgeräte 14a und 14b, die Steuereinrichtung 14 sowie schließlich die einstellbaren Bauteile 15 und 16 enthaltenden Hauptregelkreis, und zum anderen einen die Meßgeräte 14a und 14b, das Steuergerät 14, das regelbare elektrische Ventil 31 und die Heizeinrichtung 29 enthaltenden Zusatz-Regelkreis.

## Patentansprüche

1. Verfahren zur Nutzung von Windenergie, welche mittels einer Windkraftanlage, die einen elektrischen Generator (4) und einen diesen antreibenden Windrotor (1) enthält, in elektrische Leistung umgewandelt wird, welche wiederum einer Verbraucheranordnung (9) zugeführt wird, wobei durch Beeinflussung des Leistungsbedarfes der Verbraucheranordnung in Abhängigkeit vom Leistungsangebot der Windkraftanlage mindestens in einem bestimmten Windrotor-Drehzahlbereich dafür Sorge getragen wird, daß im wesentlichen sämtliche, von der Windkraftanlage aus der Windenergie mit optimalem Wirkungsgrad erzeugte elektrische Leistung von der Verbraucheranordnung aufgenommen wird, **dadurch gekennzeichnet, daß** die Verbraucheranordnung (9) so gewählt wird, daß sie mindestens einen Verbraucher (11) enthält oder daraus besteht, bei welchem der Verlauf des Antriebsleistungsbedarfes in Abhängigkeit von der Antriebsdrehzahl und/oder Antriebs-Speisespannung in dem Betriebsbereich entsprechend dem genannten bestimmten Windrotor-Drehzahlbereich dem Verlauf der von der Windkraftanlage erzeugten elektrischen Leistung in Abhängigkeit von der Windgeschwindigkeit oder von der Windrotordrehzahl entspricht und daß die von der Windkraftanlage erzeugte elektrische Leistung mittels einer regelbaren Frequenzumsetzereinrichtung und/oder einer regelbaren Spannungsumsetzereinrichtung der von dem mindestens einen Verbraucher aufgenommenen Antriebsleistung gleich gemacht wird.

2. Verfahren nach Anspruch 1, **dadurch gekennzeichnet, daß** die von der Windkraftanlage (1, 3, 4) erzeugte elektrische Leistung, welche mindestens in dem genannten bestimmten Windrotor-Drehzahlbereich im wesentlichen entsprechend der dritten Potenz der Windgeschwindigkeit ansteigt, einer mindestens Teil der Verbraucheranordnung (9) bildenden Strömungsmaschinen-Verdichteranordnung (11) mit einem entsprechend der dritten Potenz der Drehzahl der elektrischen Verdichter-Antriebsmittel (10) ansteigenden Antriebsleistungsbedarf zugeführt wird.

3. Verfahren nach Anspruch 2, **dadurch gekennzeichnet, daß** von dem elektrischen Generator ein Leistungsanteil über ein Regelorgan (31) einer elektrischen Heizeinrichtung (29) zur Aufheizung eines Strömungsmittels auf der Eingangsseite der Strömungsmaschinen-Verdichteranordnung (11) zugeführt wird, wobei der der Heizeinrichtung (29) zugeführte Anteil der Ausgangsleistung des elektrischen Generators (4) von einem Vergleich der Windgeschwindigkeit mit der Windrotordrehzahl abhängig gemacht wird.

4. Einrichtung zur Nutzung von Windenergie mit einer Windkraftanlage (1, 3, 4), welche einen Windrotor (1) und einen von diesem angetriebenen elektrischen Generator (4) enthält, ferner mit einer Verbraucheranordnung (9) zur Aufnahme der von der Windkraftanlage erzeugten elektrischen Leistung und mit Steuer- und Umformermitteln (13, 14; 15, 16, 14), welche zwischen die Windkraftanlage und die Verbraucheranordnung geschaltet sind, **dadurch gekennzeichnet, daß** die Verbraucheranordnung (9) mindestens einen Verbraucher (11) enthält, oder daraus besteht, bei welchem der Verlauf des Antriebsleistungbedarfes in Abhängigkeit von der Antriebsdrehzahl und/oder der Antriebs-Speisespannung in dem Betriebsbereich entsprechend einem bestimmten Windrotor-Drehzahlbereich dem Verlauf der von der Windkraftanlage erzeugten elektrischen Leistung in Abhängigkeit von der Windgeschwindigkeit oder der Windrotordrehzahl entspricht und daß die Steuer- und Umformermittel regelbare Frequenzumsetzermittel (13; 15, 16) und/oder regelbare Spannungsumformermittel zwischen dem Ausgang des vom Windrotor angetriebenen Generators (4) und dem Eingang für die elektrische Eingangsleistung der Verbraucheranordnung (9) enthalten, wobei die Regelung so erfolgt, daß die von der Windkraftanlage erzeugte elektrische Leistung der von dem mindestens einen Verbraucher aufgenommenen elektrischen Antriebsleistung gleich gemacht wird.

5. Einrichtung nach Anspruch 4, **dadurch gekennzeichnet, daß** die Verbraucheranordnung (9) eine Strömungsmaschinen-Verdichteranordnung (11) mindestens enthält, deren Antriebsleistungbedarf im wesentlichen mit der dritten Potenz der Drehzahl der Verdichterantriebsmittel (10) ansteigt.

6. Einrichtung nach Anspruch 5, **dadurch gekennzeichnet, daß** die elektrischen Verdichterantriebsmittel (10) mit dem Ausgang des Generators (4) der Windkraftanlage über eine Frequenzumformeranordnung (15, 16) gesteuert veränderbaren Frequenzumsetzungsverhältnisses gekoppelt sind.

7. Einrichtung nach einem der Ansprüche 4 bis 6, **dadurch gekennzeichnet, daß** vom Ausgang des elektrischen Generators (4), insbesondere im Bereich eines Gleichstromzwischenkreises (17) über einstellbare oder regelbare elektrische Ventilmittel (31) eine elektrische Teilleistung abzweigbar und einer Heizeinrichtung (29) zuführbar ist, die ein Flüssigkeitsvolumen (30) in einem Raum auf der Eingangsseite einer Teil der Verbraucheranordnung (9) bildenden Strömungsmaschinenverdichteranordnung (11) beheizt, wobei die Einstellung der elektrisches. Ventilmittel (31) abhängig von einem Ergebnis des Vergleiches zwischen der Windrotordrehzahl und der Windgeschwindigkeit erfolgt.

## Claims

1. Method for utilising wind energy that is converted into electric power by means of a wind energy unit that comprises an electric generator (4) and a wind rotor (1) that drives this, supplying energy to a load system (9), wherein by influencing the power demand of the load system as a function of the power supply from the wind energy unit, at least in a certain wind rotor rotational speed range, it is ensured that essentially all electrical power produced with optimum efficiency from the wind energy by the wind energy unit is taken up by the load system, **characterised in that** the load system (9) is selected such that it comprises or consists of at least one appliance (11), wherein the variation of requirements in terms of driving power, depending on the drive speed and/or the supply voltage in the operating range in accordance with the cited certain wind rotor rotational speed range, corresponds to the variation of electrical power produced by the wind energy unit as a function of the wind speed or the speed range of the wind rotor and that the electrical power produced by the wind energy unit is equalised by means of an adjustable frequency converter device and/or an adjustable voltage converter device for the driving power taken up by the at least one appliance.

2. Method according to claim 1, **characterised in that** the electric power produced by the wind energy unit (1, 3, 4) which increases, at least in the cited certain rotational speed range of the wind rotors, essentially corresponding to the third power of the wind speed, is supplied to at least a part of the flow machine compressor arrangement (11) forming the load system (9) with a rising drive power requirement corresponding to the third power of the rotational speed of the electrical compressor drive means (10).

3. Method according to claim 2, **characterised in that** a power component from the electric generator is supplied over a controlling element (31) of an electric heating device (29) for heating up a flow means to the entry side of the flow machine compressor arrangement (11), wherein the component of the output of the electric generator (4) supplied to the heating device (29) is made dependent on the comparison of the wind speed with the rotational speed of the wind rotor.

4. Installation for utilising wind energy with a wind energy unit (1, 3, 4), which comprises a wind rotor (1) and an electric generator (4) that is driven by the wind rotor, furthermore with a load system (9) to receive the electric power generated by the wind energy unit and with means for control and conversion (13, 14; 15, 16, 14) that are connected between the wind energy unit and the load system, **characterised in that** the load system (9) comprises or consists of at least one appliance (11), in which the variation of requirements in terms of driving power, depending on the drive speed and/or the supply voltage in the operating range in accordance with the wind speed or the wind rotor rotational speed range, corresponds to a variation of electrical power produced by the wind energy unit as a function of the wind speed or the speed range of the wind rotor and that the means for control and conversion comprise adjustable frequency converter devices (13; 15, 16) and/or adjustable voltage conversion devices between the output of the generator (4) driven by the wind rotor and the input for the electric input power of the load system (9), wherein the adjustment occurs in such a manner that the electrical power produced by the wind energy unit is made equal to the electrical driving power taken up by the at least one appliance.

5. Installation according to claim 4, **characterised in that** the load system (9) at least comprises one flow machine compressor arrangement (11), whose drive power requirement increases essentially with the third power of the rotational speed of the compressor drive means (10).

6. Installation according to claim 5, **characterised in that** the electric compressor drive means (10) are coupled with the output of the generator (4) of the wind energy unit over a frequency converter arrangement (15, 16) controlled by a modifiable frequency transformer ratio.

7. Installation according to one of claims 4 to 6, **characterised in that** a part of the electrical power can be tapped off from the output of the electric generator (4), in particular in the range of a direct current intermediate circuit (17) over settable or adjustable electric valve means (31), and can be supplied to a heating device (29) that heats a volume of liquid (30) in a space on the input side of a part of the flow machine compressor arrangement (11) forming the load system (9), wherein the electric valve means (31) is adjusted as a function of a solution of the ratio between the rotational speed of the wind rotor and the wind speed.

## Revendications

1. Procédé pour utiliser l'énergie éolienne qui est convertie à l'aide d'une installation éolienne qui contient un générateur (4) électrique et un rotor à vent (1) l'entraînant, en puissance électrique qui est de nouveau transmise à un ensemble de récepteurs (9), sachant qu'il est veillé en influençant le besoin de puissance de l'ensemble de récepteurs en fonction de l'offre de puissance de l'installation éolienne au moins dans une plage de vitesse de rotation du rotor à vent déterminée à ce que sensiblement toute la puissance électrique générée par l'installation éolienne à partir de l'énergie éolienne avec un rendement optimal soit reçue par l'ensemble de récepteurs, **caractérisé en ce que** l'ensemble de récepteurs (9) est choisi de sorte qu'il contienne au moins un récepteur (11) ou s'en compose, pour lequel l'étendue du besoin de puissance d'entraînement en fonction de la vitesse de rotation d'entraînement et/ou de la tension d'alimentation d'entraînement dans la plage de fonctionnement selon la plage de vitesse de rotation du rotor à vent déterminée citée correspond à l'étendue de la puissance électrique générée par l'installation éolienne en fonction de la vitesse du vent ou de la vitesse de rotation du rotor à vent et **en ce que** la puissance électrique générée par l'installation éolienne est égale à la puissance d'entraînement reçue par l'au moins un récepteur à l'aide d'un dispositif de conversion de fréquence réglable et/ou un dispositif de conversion de tension réglable.

2. Procédé selon la revendication 1, **caractérisé en ce que** la puissance électrique générée par l'installation éolienne (1, 3, 4) qui augmente au moins dans la plage de vitesse de rotation du rotor à vent déterminée et citée sensiblement selon la troisième puissance de la vitesse du vent, est transmise à un ensemble de compresseur de turbomachine (11) formant au moins une partie de l'ensemble de récepteurs (9), un besoin de puissance d'entraînement augmentant selon la troisième puissance de la vitesse de rotation des moyens d'entraînement de compresseur électriques (10).

3. Procédé selon la revendication 2, **caractérisé en ce qu'**une part de puissance est transmise par le générateur électrique via un organe de régulation (31) à un dispositif de chauffage (29) électrique pour le chauffage d'un moyen d'écoulement sur le côté entrée de l'ensemble de compresseur de turbomachine (11), la part transmise au dispositif de chauffage (29) de la puissance de sortie du générateur électrique (4) dépendant d'une comparaison entre la vitesse du vent et la vitesse de rotation du rotor à vent.

4. Dispositif pour utiliser l'énergie éolienne avec une installation éolienne (1, 3, 4) qui contient un rotor à vent (1) et un générateur (4) électrique entraîné par celui-ci, de plus avec un ensemble de récepteurs (9) pour la réception de la puissance électrique générée par l'installation éolienne et avec des moyens de commande et de conversion (13, 14 ; 15, 16, 14) qui sont montés entre l'installation éolienne et l'ensemble de récepteurs, **caractérisé en ce que** l'ensemble de récepteurs (9) contient au moins un récepteur (11) ou s'en compose, pour lequel l'étendue du besoin de puissance d'entraînement en fonction de la vitesse de rotation d'entraînement et/ou de la tension d'alimentation d'entraînement dans la plage de fonctionnement selon une plage de vitesse de rotation du rotor à vent déterminée correspond à l'étendue de la puissance électrique générée par l'installation éolienne en fonction de la vitesse du vent ou de la vitesse de rotation du rotor à vent et **en ce que** les moyens de commande et de conversion contiennent des moyens de conversion de fréquence (13 ; 15, 16) réglables et/ou des moyens de conversion de tension réglables entre la sortie du générateur (4) entraîné par le rotor à vent et l'entrée pour la puissance d'entrée électrique de l'ensemble de récepteurs (9), la régulation étant effectuée de sorte que la puissance électrique générée par l'installation éolienne soit égale à la puissance d'entraînement électrique reçue par l'au moins un récepteur.

5. Dispositif selon la revendication 4, **caractérisé en ce que** l'ensemble de récepteurs (9) contient au moins un ensemble de compresseur de turbomachine (11), dont le besoin de puissance d'entraînement augmente sensiblement avec la troisième puissance de la vitesse de rotation des moyens d'entraînement de compresseur (10).

6. Dispositif selon la revendication 5, **caractérisé en ce que** le couplage des moyens d'entraînement de compresseur (10) électriques à la sortie du générateur (4) de l'installation éolienne est commandé par un ensemble de conversion de fréquence (15, 16) selon un rapport de conversion de fréquence modifiable.

7. Dispositif selon l'une quelconque des revendications 4 à 6, **caractérisé en ce qu'**une puissance partielle électrique peut être dérivée de la sortie du générateur électrique (4) en particulier dans la zone d'un circuit intermédiaire à courant continu (17) par des moyens de distribution (31) électriques ajustables ou réglables et transmise à un dispositif de chauffage (29) qui chauffe un volume de liquide (30) dans un espace sur le côté entrée d'un ensemble de compresseur de turbomachine (11) formant une partie de l'ensemble de récepteurs (9), les moyens de distribution électriques (31) étant réglés en fonction d'un résultat de comparaison entre la vitesse de rotation du rotor à vent et la vitesse du vent.
